# EUROPÄISCHE PATENTANMELDUNG

(11) **EP 3 636 964 A1**
(43) Veröffentlichungstag der Anmeldung: **15.04.2020**
(21) Anmeldenummer: 18199346.0
(22) Anmeldetag: 09.10.2018
(51) Int. Cl.: F16J 13/00, B65D 79/02

(54) **KAPPEN MIT DRUCKANZEIGE FÜR BEHÄLTER**

(71) Anmelder: LANXESS Deutschland GmbH, 50569 Köln (DE)
(72) Erfinder: VOGL, Erasmus, 51429 Bergisch-Gladbach (DE); DAHMEN, Michael, 51143 Köln (DE)

(57) **Zusammenfassung**

Die Erfindung betrifft eine Kappe (1) zum Verschließen eines Behälters (2), umfassend zumindest eine Membran (4), auf der eine Druckanzeigeeinheit (3) aufgebracht ist, sowie ein optisch transparentes Material, welches in das Kappenmaterial integriert ist oder aus dem das Kappenmaterial besteht und durch welches die Druckanzeigeeinheit betrachtet deren Verwendung zum Verschließen von Behältern, sowie Behälter (2), die mit diesen Kappen verschlossen sind.

## Beschreibung

Die Erfindung betrifft eine Kappe zum Verschließen eines Behälters, umfassend zumindest eine Membran, auf der eine Druckanzeigeeinheit aufgebracht ist, sowie ein optisch transparentes Material, welches in das Kappenmaterial integriert ist oder aus dem das Kappenmaterial besteht und durch welches die Druckanzeigeeinheit betrachtet werden kann und deren Verwendung zum Verschließen von Behältern, sowie Behälter, die mit diesen Kappen verschlossen sind.

In geschlossenen, insbesondere blickdichten, aber auch transparenten Behältern, wie sie beispielsweise zum Transport und der Lagerung von Chemikalien verwendet werden, besteht für den Zwischen- oder Endverbraucher oftmals der Bedarf, vor dem Öffnen der Verpackung eine Aussage über den physikalischen Zustand der gelagerten Substanz im Behälter zu erhalten. Einer der dabei besonders wichtigen Parameter ist der Druck.

Dies ist in den Fällen von entscheidender sicherheitstechnischer Bedeutung, in denen sich zum Beispiel über den Lagerzeitraum bzw. den Transport unerwünschte Veränderungen im Behälter ergeben können. Beispielsweise gibt es viele Chemikalien oder Stoffmischungen, welche sich tendenziell zersetzen können und dabei gasförmige Substanzen abgeben können. Auch ein Zerfall der Stoffe oder Stoffmischungen selbst, in unter Standardbedingungen gasförmige Substanzen, ist bekannt. Die entstehenden Gase können nicht entweichen, denn die Behälter müssen dicht verschlossen sein, beispielsweise um den gefahrlosen Transport sicherzustellen. Je nach Situation besteht damit die Möglichkeit, dass sich durch die angesammelten Gase der Innendruck in dem Behälter erhöht. Der unkontrollierte und unbekannte Innendruck führt dann zu einer Reihe unerwünschter Effekte.

Beispielsweise kommt es beim Öffnen zu einer schlagartigen Entspannung. Dies wiederum kann dazu führen, dass die im Behälter befindliche Substanz mitgerissen wird, ungewollt in die Umgebung austritt und Personen und Gegenstände verunreinigt.

Weiter kann durch die ungewollte spontane Expansion der angesammelten Gase, während des Vorgangs der Öffnung ein Gegenstand, beispielsweise der Verschluss selbst, stark beschleunigt werden und Personen oder Objekte im Umfeld verletzen.

Weiter kann durch den sich aufbauenden Innendruck eine im Behälter befindliche Flüssigkeit stark mit Gas gesättigt sein. Durch die Entspannung während des Öffnens kann dies beispielsweise zu schlagartigem Schäumen mit vehementem Substanzaustritt führen.

Weiter kann durch den sich aufbauenden Innendruck auch ohne den Vorgang des Öffnens die mechanische Stabilität des Behälter und der jeweiligen Verpackung in Mitleidenschaft gezogen werden. Der Behälter kann sich unerwünscht verformen oder sogar bersten. Durch die mechanische Beschleunigung der Stücke während des Berstens sind weitere Verletzungen möglich, was beispielweise bei Glasbehältern und daraus folgenden Glassplittern sehr leicht zu weitergehenden und ernsten Verletzungen von Personen führen kann.

Aus dem Stand der Technik sind an Behältern angeschlossene Manometer zur Anzeige des Druckes bekannt, mit denen ein Überdruck angezeigt werden kann. Diese kommen z.B. bei Gaszylindern für Taucher oder bei praktisch allen Gasflaschen im Labor zum Einsatz. Diese Manometer bestehen üblicherweise aus einer federbelastbaren Membran und einer daran angekoppelten Nadel, welche auf einer Skala durch ihre Auslenkung den Druck anzeigen kann. Dieses Druckmesssystem ist besonders in wieder-befüllbare Behälter einsetzbar, beispielsweise bei metallischen Stahltanks oder Fässern unterschiedlichster Art und Bauweise. Für Einwegbehälter sind derartige separat angebrachte mechanische Manometer zu kostspielig und benötigen technische Expertise bei der Installation und der Nutzung.

Eine weitere nach dem Stand der Technik bekannte Vorrichtung sind an die Behälter angebrachte Berstscheiben. Diese werden in unterschiedlichsten Ausführungen, beispielsweise von der Firma Fike Deutschland, Innstrasse 28, 68199 Mannheim, vertrieben. Leider wird hier bei erhöhtem Druck die Integrität der Behälter aufgegeben, insofern als die Scheiben nachgeben und zerbrechen. Dadurch besteht die Gefahr, dass der chemische, gegebenenfalls toxische Inhalt, freigesetzt wird.

Aus der KR-A 20130123027 ist eine Vorrichtung bekannt, bei der eine Kappe durch eine laterale Perforation eines Polyvinylüberzugs versehen wird um die Zersetzung von Füllbestandteilen zu verhindern. Durch diese Vorrichtung wird allerdings im Fall des Überdrucks nicht der Druck angezeigt sondern die Integrität des Behälters aufgegeben. Dies hat im Schadensfall, beispielsweise während des Transportes, erhebliche Nachteile und hilft nicht den Druck im Behälter zu erkennen.

Aus der US-A 20120257478 ist eine Kappe bekannt, welche für Medizingeräte eingesetzt werden kann. Diese Kappe enthält einen mechanischen Sensor um festzustellen, ob die Kappe auf ein Gewinde aufgeschraubt ist oder nicht. Mit diesem Sensor ist eine in die Kappe integrierte digitale Zeitaufzeichnung gekoppelt, so dass festgestellt werden kann, wann die Kappe auf und abgeschraubt wurde. Eine Analyse des Innendrucks ist damit nicht möglich.

Die WO-A 02070361 beschreibt ein Verschlusssystem mit einem Drucksensor zum Verschließen von Behältern, die Getränke oder auch Chemikalien enthalten können. Auch dieses System ist technisch hoch komplex und daher aus ökonomischen Gründen in Einwegsystemen nicht verwendbar, aber auch technisch nicht ausreichend belastbar um die Sicherheitsanforderung für Behälter, die Gefahrstoffe transportieren, zu erfüllen.

Es bestand daher nach wie vor der Bedarf nach einem Verschlusssystem mit dem sicherheitsrelevante Drücke in verschlossenen Behältern ohne messtechnisch aufwendige und schlecht handhabbaren Messsysteme sichtbar gemacht werden können.

Überraschend wurde ein Verschlusssystem gefunden, mit dem die Nachteile des Standes der Technik überwunden werden können und ohne die Verwendung von technisch aufwendigen und schlecht handhabbaren Messsystemen ein sicherheitsrelevanter Druck dem Betrachter sichtbar gemacht wird.

Gegenstand der Erfindung ist daher eine Kappe zum Verschließen eines Behälters, umfassend zumindest eine Membran, auf der eine Druckanzeigeeinheit aufgebracht ist, sowie ein optisch transparentes Material, welches in das Kappenmaterial integriert ist oder aus dem das Kappenmaterial besteht und durch welches die Druckanzeigeeinheit betrachtet werden kann.

Das Material der Kappe oder das Kappenmaterial besteht vorzugsweise aus einem Polymeren oder aus Metall. Als Metalle, aus denen das Kappenmaterial bestehen kann, werden vorzugsweise Edelstahl oder Aluminium verwendet. Als Polymere, aus denen das Kappenmaterial bestehen kann, können vorzugsweise Polyethylenterephthalat (PET), Polypropylen (PP) oder Polyethylen (PE) oder Mischungen dieser Polymere eingesetzt werden. Besonders bevorzugt besteht das Kappenmaterial aus einem optisch transparenten Material. Ganz besonders bevorzugt besteht das Kappenmaterial aus optisch transparentem Polyethylenterephthalat (PET), optisch transparentem Polypropylen (PP), optisch transparentem Polyethylen (PE), optisch transparentem Polymethylmethacrylat oder optisch transparentem Propylen-Ethylen-Copolymeren oder Mischungen dieser Polymeren. Noch weiter bevorzugt besteht das Kappenmaterial aus optisch transparentem Polyethylen. Die Herstellung optisch transparenter Polymeren, der bevorzugt genannten Art, ist dem Fachmann bekannt. Beispielsweise sind Polyethylenterephthalat (PET), Polypropylen (PP) oder Polyethylen (PE) bei ihrer Herstellung üblicherweise optisch transparent.

Die Kappe wird vorzugsweise mit einem Schraubgewinde auf der Öffnung mit dem Behälter befestigt. Andere Befestigungen der Kappe an der Öffnung des Behälters z.B. mittels Metallbügel oder dem Aufpressen der Kappe auf die Behälteröffnung, analog zu einem Kronkorken, können auch eingesetzt werden und sind aus dem Stand der Technik dem Fachmann bekannt.

Die Kappe kann vorzugsweise auch durch Sicherheitsringe modifiziert sein. Sicherheitsringe dienen zum Anzeigen einer Erstöffnung einer Flasche. Sicherheitsringe bestehen vorzugsweise aus dem Kappenmaterial.

Die Membran besteht vorzugsweise aus mindestens einem Polymeren. Geeignete Polymere sind vorzugsweise Polypropylen, Polyethylen, Polyethylenterephthalat, Polystyrene, Polyurethan, Polycarbonat, Ethylen-Propylen-Dien-Kautschuk (EPDM), Propylen-Ethylen-Copolymer oder fluorierter Polymere, wie vorzugsweise Fluorkautschuk (FKM) nach DIN ISO 1629 und Fluorkautschuck nach ASTM D 1418, Polytetrafluorethylen (PTFE) oder anderer teil- oder per-fluorierte Kohlenwasserstoffe auf Basis von Vinyliden(di)fluorid oder Mischungen dieser Polymeren. Die Polymere können auch in geschäumter Form eingesetzt werden. Als geschäumte Polymeren werden vorzugsweise geschäumtes Polystyrol, geschäumtes Polytetrafluorethylen, geschäumtes Propylen-Ethylen-Copolymer oder geschäumtes Polyurethan eingesetzt. Die Herstellung von geschäumten Polymeren ist aus dem Stand der Technik bekannt und erfolgt daher nach bekannten Verfahren. Besonders bevorzugt besteht die Membran aus Polytetrafluorethylen.

Die Membran kann aus einer Polymerschicht bestehen oder aus mehreren Polymerschichten. Bevorzugt besteht die Membran aus zwei Polymerschichten. In einer besonders bevorzugten Ausführungsform der Erfindung besteht die Membran aus einer Schicht eines fluorierten Polymeren und einer Schicht eines geschäumten Polymeren. Vorzugsweise werden die Schichten mittels eines Klebstoffes verbunden. Als Klebstoffe werden vorzugsweise Cyanacrylate, Methylmethacrylate, ungesättigte Polyester, Epoxidharze, Phenolharze, Polyimide, Polysulfide, Bismaleimide und 1-Komponenten- und 2-Komponenten kondensationsvernetzende Silikone eingesetzt. Falls eine Membran mit einer Schicht aus einem fluorierten Polymeren in die Kappe eingesetzt wird, wird vorzugsweise diese Schicht in die Kappe mit Richtung zur Behälteröffnung eingesetzt.

Auf die Membran kann eine Dichtung oder ein Dichtring aufgelegt werden. Das Einlegen der Dichtung erfolgt vorzugsweise auf der Seite der Membran, die der Behälteröffnung zugewendet ist. Diese Dichtung wird vorzugsweise ebenfalls durch einen Klebstoff an der Membran fixiert. Ebenso könnte die Fixierung der Dichtung auf der Membran, durch die mechanische Kraft, die beim Verschließen der Behälteröffnung mit der Kappe wirkt, also durch Einklemmen der Dichtung, erfolgen.

Vorzugsweise hat die Membran eine Dicke von 5 µm bis 10 mm. Besonders bevorzugt hat die Membran eine Dicke von 1 mm bis 10 mm.

Vorzugsweise bedeckt die Membran, die Behälteröffnung vollständig. Vorzugsweise dient die Membran gleichzeitig als Dichtung. Vorzugsweise erfolgt die Fixierung der Membran auf der Behälteröffnung durch Verschließen des Behälters mit der Kappe.

Die Druckanzeigeeinheit gibt die Änderung des Druckes, vorzugsweise über eine Form- oder Farbänderung, wieder. Vorzugsweise wird dabei die Druckänderung durch eine Form- und/oder Farbänderung der Druckanzeigeeinheit angezeigt. Die Anzeige kann dabei sowohl reversible als auch irreversible die Zustandsänderung anzeigen. Die Druckanzeigeeinheit wird vorzugsweise durch Auflegen auf die Membran aufgebracht. Die Druckanzeigeeinheit kann auf der Oberseite der Membran bzw. der dem Behälter abgewandten Seite mit Hilfe eines Klebstoffes befestigt werden. Als Klebstoffe werden vorzugsweise Cyanacrylate, Methylmethacrylate, ungesättigte Polyester, Epoxidharze, Phenolharze, Polyimide, Polysulfide, Bismaleimide und 1-Komponenten- und 2-Komponenten Kondensationsvernetzende Silikone und Glutinleime oder Mischungen dieser Klebstoffe eingesetzt. Vorzugsweise wird die Membran gemeinsam mit der Druckanzeigeeinheit in die Kappe eingeführt. Die Fixierung der Membran und der Druckanzeigeeinheit erfolgt dann vorzugsweise dadurch, dass die Membran den im Wesentlichen gleichen Innendurchmesser, wie die Kappe aufweist und in die Kappe eingeklemmt wird. Im "Wesentlichen" bedeutet im Sinne der vorliegenden Erfindung, dass die Größendifferenz zwischen dem Innendurchmesser der Kappe und der Membran nicht mehr als 1 %, bevorzugt nicht mehr als 0,1 %, abweicht.

Durch das Kappenmaterial oder durch das in das Kappenmaterial integrierte optisch transparente Material kann dann die Zustandsänderung der Druckanzeigeeinheit optisch beobachtet werden. Dies kann z.B. dadurch erfolgen, dass das Kappenmaterial aus einem optisch transparenten Polymeren besteht oder das in das Kappenmaterial ein optisch transparentes Material eingesetzt wird und dieses die Beobachtung der Druckanzeigeeinheit erlaubt. Als optisch transparentes Material werden vorzugsweise optisch transparentes Polyethylenterephthalat (PET), optisch transparentes Polypropylen (PP), optisch transparentes Polyethylen (PE) oder optisch transparentes Propylen-Ethylen-Copolymer oder Mischungen dieser Polymeren oder Glas eingesetzt.

In einer erfindungsgemäßen Ausführungsform ist die Druckanzeigeeinheit ein Gefäß, das mit einem Farbstoff gefüllt ist. Dieses Gefäß wird vorzugsweise ohne weitere Fixierung auf die Membran aufgebracht. Die Membran wird vorzugsweise im Wesentlichen mit dem gleichen Innendurchmesser, wie die Kappe angefertigt und vorzugsweise zusammen mit dem Gefäß, das den Farbstoff enthält, in die Kappe eingesetzt. Die Kappe mit der Membran und dem Gefäß mit dem Farbstoff wird auf den Behälter aufgesetzt und durch das Verschließen der Kappe wird vorzugsweise die Membran auf die Behälteröffnung gepresst. Vorzugsweise erfolgt damit der Verschluss des Behälters. Bei Drücken von vorzugsweise ≥ 2 bar bis 50 bar im Behälter, besonders bevorzugt ≥ 2 bar bis 30 bar im Behälter, wird das Gefäß an das Kappenmaterial gedrückt und beschädigt. Der Farbstoff tritt aus und die Beschädigung, sowie die Verteilung des Farbstoffes kann optisch wahrgenommen werden. Vorzugsweise kann die Beschädigung und die Verteilung des Farbstoffes, vorzugsweise direkt durch das Kappenmaterial oder durch das optisch transparente Material optisch wahrgenommen werden.

Das Gefäßmaterial besteht vorzugsweise aus organischen oder anorganischen Polymeren oder Glas. Besonders bevorzugt besteht das Gefäßmaterial aus organischen Polymeren, wie insbesondere Gelatine oder Polyssachariden. Die Materialien aus dem das Gefäß besteht, sollten vorzugsweise bei Drücken ≥ 2 bar bis 30 bar im Behälter und Standardtemperatur (25 °C) zerbersten. Ganz besonders bevorzugt besteht das Gefäß aus Gelatine.

Als Farbstoff werden vorzugsweise Lebensmittelfarbstoffe eingesetzt. Besonders bevorzugt wird Rote-Beete-Saft eingesetzt.

In einer weiteren erfindungsgemäßen Ausführungsform ist die Druckanzeigeeinheit eine transparente Folie, auf der eine viskose Flüssigkeit aufgetragen wurde und auf der dann eine weitere Folie aufgelegt wird. Beide Folien bestehen vorzugsweise aus Polyethylen. Die viskose Flüssigkeit besitzt vorzugsweise eine Viskosität von 50 mPa*s bis 50000 mPa*s gemessen nach EN ISO 3219. Vorzugsweise ist die viskose Flüssigkeit ein Öl oder Mischungen unterschiedlicher Öle, insbesondere Speiseöle, oder Wachse, die bei Standardbedingungen (Temperatur = 25 °C und Druck = 1 bar) flüssig oder leicht verformbar sind. Besonders bevorzugt ist die Flüssigkeit Palmöl, Rapsöl, Olivenöl oder Mischungen dieser Öle. Die viskose Flüssigkeit wird vorzugsweise durch Streichen, Sprühen oder Tröpfeln auf die Folie aufgetragen. Die viskose Flüssigkeit wird dann mit einer weiteren Folie abgedeckt. Die so erstellte Einheit wird vorzugsweise zwischen dem Kappenmaterial oder dem optisch transparenten Material, welches in das Kappenmaterial integriert wurde und der Membran mittels geeigneter Klemmen oder durch Verschließen des Behälter mit der Kappe fixiert. Auf dem Kappenmaterial oder dem optisch transparenten Material werden vorzugsweise eine oder mehrere kreisförmige Linien konzentrisch aufgezeichnet, in der Art, dass der Öltropfen optisch innerhalb dieser Linien liegt. Bei Drücken von vorzugsweise ≥ 2 bar bis 30 bar im Behälter wird der Öltropfen von der Membran auf das Kappenmaterial oder dem optisch transparenten Material, welches in das Kappenmaterial integriert wurde, gepresst und vergrößert sich kreisförmig. Vorzugsweise wird der Druck anhand der konzentrischen und bevorzugt kalibrierten Linien abgelesen. Diese können auf bestimmte Drücke kalibriert werden oder einfach nur qualitativ anzeigen, dass der Druck im Behälter zu groß ist und eine Gefahr beim Öffnen des Behälters oder der Zersetzung des Inhaltes besteht. Vorzugsweise wird qualitativ anhand des Radius des Öltropfens bestimmt, dass die Gefahr beim Öffnen des Behälters oder der Zersetzung des Inhaltes besteht.

Von der Erfindung ist ebenfalls die Verwendung der erfindungsgemäßen Kappe zum Verschließen eines Behälters umfasst. Die Erfindung betrifft ebenfalls den Behälter, der mit der erfindungsgemäßen Kappe verschlossen ist. Behälter, die mit der erfindungsgemäßen Kappe verschlossen sind werden vorzugsweise zum Transport und der Lagerung von Chemikalien, insbesondere von Dialkyldicarbonaten, vorzugsweise von Dimethyldicarbonat, verwendet.

Bei dem Behälter handelt es sich vorzugsweise um eine Flasche. Der Behälter kann aus Polymeren, wie vorzugsweise Polyethylenterpthalat, Polypropylen oder Polyethylen, oder aus Metall, wie vorzugsweise Aluminium und Edelstahl oder aus vorzugsweise Glas bestehen. Besonders bevorzugt besteht der Behälter mindestens zu 95 Gew. % aus Aluminium bezogen auf das Gesamtgewicht des Behälters ohne Kappe. Der Behälter dient vorzugsweise dem Transport und der Lagerung von Chemikalien, besonders bevorzugt zum Transport und Lagerung von Dialkyldicarbonaten und noch weiter bevorzugt zum Transport und Lagerung von Dimethyldicarbonat.

Im Folgenden wird die Erfindung ohne Beschränkung des allgemeinen Erfindungsgedankens unter Bezugnahme auf die Figur näher erläutert.

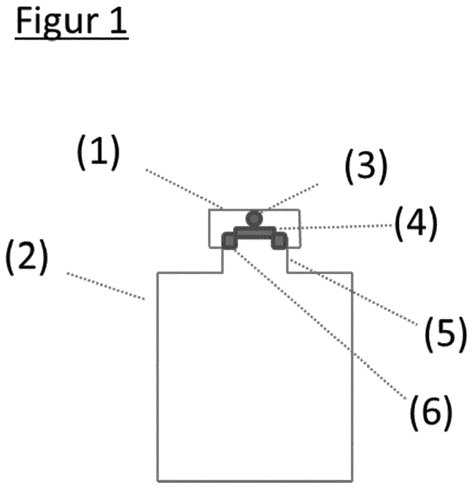

Figur 1 zeigt einen allgemeinen Aufbau der erfindungsgemäßen Kappe.

Figur 1 zeigt dabei eine erfindungsgemäße Kappe (1) zum Verschließen eines Behälters (2), umfassend zumindest eine Membran (4), auf der eine Druckanzeigeeinheit (3) aufgebracht ist, sowie ein optisch transparentes Material, welches in das Kappenmaterial integriert ist oder aus dem das Kappenmaterial besteht und durch welches die Druckanzeigeeinheit (3) betrachtet werden kann.

Bevorzugt bedeckt die Membran (4) die Behälteröffnung (5) vollständig. Durch Anpressen der Kappe (1) mit der Membran (4) wird vorzugsweise der Behälter (2) verschlossen. Die Membran kann aber ebenfalls nur soweit in der Kappe (1) befestigt sein, dass weitere Dichtungen (6) benötigt werden, um die Behälteröffnung (5) zu verschließen. Bevorzugt werden keine zusätzlichen Dichtungen (6) verwendet.

Mit der erfindungsgemäßen Kappe kann ohne die Verwendung technisch aufwendiger Messsysteme der Druck in Behältern optisch überwacht werden. Personen, die mit Verbindungen umgehen, die leicht zersetzen und dabei gasförmige Substanzen freisetzen, werden durch die Verwendung von Behältern mit der erfindungsgemäßen Kappe auf den entstehenden Überdruck hingewiesen und dadurch geschützt. Die erfindungsgemäße Kappe weist damit erhebliche sicherheitstechnische Vorteile beim Umgang, Lagerung und Transport von leicht zersetzenden chemischen Verbindungen, insbesondere von Dialkyldicarbonaten, besonders bevorzugt von Dimethyldicarbonat, auf. Die erfindungsgemäße Kappe kann besonders als Einmalverschlusssystem zum Einsatz kommen. Diese Verschlusssysteme werden nicht wieder verwendet sondern nach der Benutzung entsorgt.

### Beispiele

### Beispiel 1

In eine handelsübliche Verschluss-Kappe von 7 cm Durchmesser mit Schraubgewinde, welche aus transparentem Polyethylen gefertigt war, wurde innen eine Membran (Dicke : 5 mm) aus Polytetrafluorethylen (PTFE) eingelegt. Die Kappe trug außerdem einen Sicherungsring zur Indikation der Unversehrtheit vor Öffnung. Zusätzlich wurde zwischen die Membran und dem Kappenmaterial eine Kugel aus Gelatine eingeklebt. Die Gelatinekugel war mit Rote-Beete Saft gefüllt. Die so vorbereitete Kappe wurde auf eine 25 I Glasflasche aufgeschraubt und fest verschlossen.

In die Flasche wurde kurz vorher eine Mischung aus Dimethyldicarbonat und Wasser (jeweils 3 kg) gegeben. Das Wasser wurde zum Zwecke eines hohen Druckaufbaus, trotz der Verwendung geringer Mengen an Dimethyldicarbonat und zur Zersetzung des Dimethyldicarbonates eingesetzt. Daraus entsteht über einen Zeitraum von max. 30 Minuten Methanol und CO₂. Das CO₂ führt zu Druckaufbau in der Flasche.

10 Minuten nach Verschließen der Glasflasche wurde die Gelatinekugel von dem entstandenen Druck (ca. 2 bar im Behälter) zerdrückt und die rote Flüssigkeit wurde an die Deckeloberseite gepresst. Dadurch war durch das optisch transparente Material der Verschlusskappe erkennbar, dass signifikanter Druck in der Flasche entstanden war. Die Flasche wurde umgehend mit entsprechender Schutzausrüstung geöffnet und konnte unversehrt entsorgt werden.

Eine weitere Flasche, welche ebenso vorbereitet wurde, welche jedoch nicht mit der erfindungsgemäßen Kappe ausgestattet war und daher auch nicht geöffnet wurde, zerplatzte nach ca. 120 min spontan.

## Patentansprüche

1. Kappe (1) zum Verschließen eines Behälters (2), umfassend zumindest eine Membran (4), auf der eine Druckanzeigeeinheit (3) aufgebracht ist, sowie ein optisch transparentes Material, welches in das Kappenmaterial integriert ist oder aus dem das Kappenmaterial besteht und durch welches die Druckanzeigeeinheit betrachtet werden kann.

2. Kappe zum Verschließen eines Behälters gemäß Anspruch 1, **dadurch gekennzeichnet, dass** die Öffnung des Behälters (5) durch die in der Kappe (1) befindlichen Membran (4) verschlossen wird.

3. Kappe zum Verschließen eines Behälters gemäß Anspruch 1 oder 2, **dadurch gekennzeichnet, dass** das optisch transparente Material ein optisch transparentes Polymer ist.

4. Kappe zum Verschließen eines Behälters gemäß einem der Ansprüche 1 bis 3, **dadurch gekennzeichnet, dass** das optisch transparente Material aus optisch transparentem Polyethylenterphthalat, optisch transparentem Polypropylen, optisch transparentem Polyethylen, optisch transparentem Polymethylmethacrylat oder optisch transparentem Propylen-Ethylen-Copolymeren oder Gemischen dieser Polymeren besteht.

5. Kappe zum Verschließen eines Behälters gemäß einem der Ansprüche 1 bis 4, **dadurch gekennzeichnet, dass** die Druckanzeigeeinheit (3) durch das Verschließen der Kappe (1) zwischen Membran (4) und dem Kappenmaterial (1) fixiert wird.

6. Kappe zum Verschließen eines Behälters gemäß einem der Ansprüche 1 bis 5, **dadurch gekennzeichnet, dass** die Membran aus mindestens einem der Polymeren ausgewählt aus der Gruppe Polypropylen, Polyethylen, Polyethylenterephthalat, Polystyrene, Polyurethan, Polycarbonat, Ethylen-Propylen-Dien-Kautschuk (EPDM), Propylen-Ethylen-Copolymer, Fluorkautschuk (FKM), Polytetrafluorethylen (PTFE) oder anderen teil- oder per-fluorierte Kohlenwasserstoffe auf Basis von Vinyliden(di)fluorid oder Mischungen dieser Polymeren besteht.

7. Kappe zum Verschließen eines Behälters gemäß einem der Ansprüche 1 bis 4, **dadurch gekennzeichnet, dass** die Druckanzeigeeinheit auf der Membran mittels eines Klebstoffes befestigt wird.

8. Kappe zum Verschließen eines Behälters gemäß Anspruch 7, **dadurch gekennzeichnet, dass** als Klebstoffe Cyanacrylate, Methylmethacrylate, ungesättigte Polyester, Epoxidharze, Phenolharze, Polyimide, Polysulfide, Bismaleimide und 1-Komponenten- und 2-Komponenten Kondensationsvernetzende Silikone und Glutinleim oder Mischungen dieser Klebstoffe eingesetzt werden.

9. Kappe zum Verschließen eines Behälters gemäß einem der Ansprüche 1 bis 8, **dadurch gekennzeichnet, dass** als Druckanzeigeeinheit ein Gefäß, das mit einem Farbstoff gefüllt ist, eingesetzt wird.

10. Kappe zum Verschließen eines Behälters gemäß einem der Ansprüche 1 bis 8, **dadurch gekennzeichnet, dass** als Druckanzeigeeinheit eine transparente Folie, auf der eine viskose Flüssigkeit aufgetragen wurde und auf der dann eine weitere Folie aufgelegt wird, eingesetzt wird.

11. Kappe zum Verschließen eines Behälters gemäß Anspruch 10, **dadurch gekennzeichnet, dass** die viskose Flüssigkeit Palmöl, Rapsöl, Olivenöl oder Mischungen dieser Öle ist.

12. Verwendung der Kappe gemäß einem der Ansprüche 1 bis 11 zum Verschließen von Behältern.

13. Verwendung der Kappe gemäß Anspruch 12, **dadurch gekennzeichnet, dass** der Behälter eine Flasche ist.

14. Verwendung der Kappe gemäß Anspruch 12 oder 13, **dadurch gekennzeichnet, dass** der Behälter einen Aluminiumgehalt von ≥ 95 Gew.% bezogen auf das Gesamtgewicht des Behälters ohne Kappe aufweist.

15. Behälter mit Kappe gemäß einem der Ansprüche 1 bis 11.
